# FASCICULE DE BREVET EUROPEEN

(11) **EP 3 008 703 B1**
(45) Date de publication et mention de la délivrance du brevet: **31.03.2021**
(21) Numéro de dépôt: 14728947.4
(22) Date de dépôt: 05.06.2014
(51) Int. Cl.: G07C 9/25, G07C 9/27

(54) **PROCÉDÉ D'IDENTIFICATION BIOMETRIQUE**
BIOMETRISCHES IDENTIFIKATIONSVERFAHREN
BIOMETRIC IDENTIFICATION METHOD

(30) Priorité: 10.06.2013 FR 1355329
(43) Date de publication de la demande: 20.04.2016
(73) Titulaire: Idemia Identity & Security France, 92400 Courbevoie (FR)
(72) Inventeur: BOUATOU, Vincent, F-92130 Issy les Moulineaux (FR); FONDEUR, Jean-Christophe, F-92130 Issy les Moulineaux (FR)
(74) Mandataire: Lavialle, Bruno François Stéphane
(86) Numéro de dépôt international: PCT/EP2014/061766
(87) Numéro de publication internationale: WO 2014/198643

(56) Documents cités:
- EP-A1- 2 573 730
- US-A1- 2010 289 614
- US-A1- 2013 002 399

## Description

### DOMAINE DE L'INVENTION

L'invention concerne le domaine de la biométrie et plus particulièrement un procédé d'identification biométrique.

### ETAT DE LA TECHNIQUE

On connaît des procédés d'identification de personnes par comparaison de caractéristiques biométriques telle que des empreintes digitales ou des images rétiniennes ou iridiennes. Ces procédés nécessitent d'enregistrer au préalable, pour chaque personne, sur un support dont l'accès est réglementé, une caractéristique biométrique de référence en relation avec des informations d'identité de la personne. Cette opération est usuellement appelée l'enrôlement. Ultérieurement, lors d'une opération d'identification d'une personne, il est effectué une acquisition, sur la personne à identifier, d'une caractéristique biométrique censée correspondre à la caractéristique biométrique de référence et une comparaison de la caractéristique biométrique acquise avec la caractéristique de référence. Certains documents officiels, tels que les passeports dits « biométriques », renferment une puce sécurisée dans laquelle sont enregistrés l'état civil du titulaire ainsi que deux de ses empreintes digitales. Ces empreintes digitales sont acquises lors de la création du passeport par un officier public, après une vérification d'identité de la personne. Elles sont ensuite enregistrées sur la puce sécurisée du passeport. Les empreintes digitales peuvent éventuellement être mémorisées sur un serveur informatique de stockage qui les associe à l'identité complète de la personne. Un tel procédé permet une vérification rapide et sûre de l'identité d'une personne par acquisition de deux caractéristiques biométriques -ici les empreintes digitales des index- et comparaison avec l'enregistrement de la puce sécurisée du passeport et/ou du serveur de stockage. Il est connu des applications d'ordre privé, comme une authentification préalable à une opération de paiement ou à l'entrée dans une zone à accès contrôlé, dans lesquelles l'une des deux caractéristiques biométriques est acquise pour être comparée avec une caractéristique biométrique mémorisée par ailleurs. L'acquisition permet potentiellement à un individu ayant accès au serveur informatique de stockage de faire le lien entre ladite caractéristique biométrique et l'état civil de la personne utilisant un tel procédé biométrique d'identification et de pouvoir ainsi suivre cette personne en méconnaissance des principes de respect de la vie privée et de libre circulation des personnes.

Prenons comme exemple un protocole de sécurité aéroportuaire comprenant plusieurs points de contrôles obligatoires. Il est important de pouvoir s'assurer qu'un voyageur est bien passé par toutes les étapes du protocole avant de le laisser accéder à l'avion. L'identité du voyageur étant vérifiée par acquisition biométrique lors de la première étape du protocole, c'est-à-dire lors de son enregistrement, les acquisitions biométriques ultérieures n'ont pour objectif que de procéder à un suivi du voyageur tout au long du protocole de sécurité. Cependant, il n'est pas utile que le personnel de sécurité ou les opérateurs aéroportuaires aient accès à l'identité du voyageur.

Pour parvenir à un tel résultat, il aurait pu être envisagé de créer une base de données associant la caractéristique biométrique d'identification à une quantité restreinte d'information sur le voyageur, par exemple son numéro de billet. Cependant, à chaque vérification d'identité, la caractéristique biométrique acquise permet, théoriquement, d'avoir accès à l'intégralité des données relatives à l'identité du voyageur, ce qui pose des problèmes de respect de la vie privée, particulièrement en ce qui concerne les craintes de recoupement des fichiers civils par des services de police. Ce manque de confidentialité représente un frein au développement de l'identification biométrique qui constitue par ailleurs une solution d'identification économique, aisée, rapide et pourvue d'un haut niveau de fiabilité (falsification délicate) Un exemple en ce sens est décrit dans la demande de brevet US2013/002399 A1 qui divulgue un procédé d'identification d'une personne possédant un document d'identification liant une première caractéristique biométrique au numéro du document, l'acquisition d'une deuxième caractéristique biométrique, l'enregistrement de la deuxième caractéristique biométrique en association par exemple à un numéro de dossier de vol, et l'identification ultérieure de la personne en acquérant à nouveau seulement la deuxième caractéristique biométrique et en la comparant avec celle enregistrée en association au numéro du dossier de vol.

### OBJET DE L'INVENTION

Un objet de l'invention est de fournir un procédé d'identification d'une personne permettant de préserver tout ou partie des données relatives à son identité.

### RESUME DE L'INVENTION

Dans ce but, on prévoit, selon l' invention selon la revendication 1

### BREVE DESCRIPTION DES DESSINS

Il sera fait référence aux figures annexées parmi lesquelles :
- la figure 1 est une vue schématique du procédé selon l'invention appliqué à un protocole de sécurité aéroportuaire ;
- la figure 2 est une vue schématique d'un passeport biométrique ;
- la figure 3 est une vue de détail d'un appareil d'acquisition d'empreintes digitales ;
- la figure 4 est une vue schématique d'un deuxième mode de réalisation du procédé selon la figure 1.

### DESCRIPTION DETAILLEE DE L'INVENTION

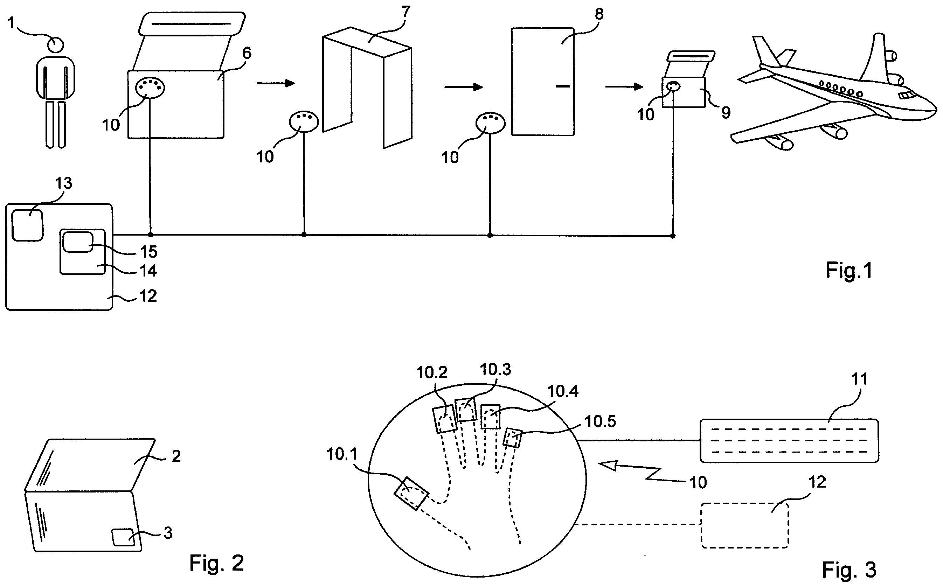

En référence aux figures 1 à 3, le procédé selon l'invention est mis en œuvre dans un aéroport pour réaliser le suivi d'un voyageur, généralement désigné 1, titulaire d'un passeport biométrique 2 intégrant une puce sécurisée 3 dans laquelle sont stockés, entre autres, des enregistrements certifiés des empreintes digitales 4 et 5, respectivement ici de l'index et du majeur de la main droite du voyageur 1, ainsi que son état civil complet et son adresse. L'aéroport comprend une pluralité de points de contrôle successifs parmi lesquels :
- un bureau d'enregistrement 6 ;
- un point de contrôle des bagages 7 ;
- un point d'accès 8 à la zone des salles d'embarquement ;
- un guichet 9 d'accès à un avion.

Chaque point de contrôle 6 à 9 est pourvu d'un moyen d'acquisition d'une caractéristique biométrique, ici un lecteur d'empreintes digitales 10 pourvu de cinq plages d'acquisition 10.1, 10.2, 10.3, 10.4 et 10.5 respectivement des empreintes du pouce, de l'index, du majeur, de l'annulaire et de l'auriculaire de la main droite du voyageur 1. Chaque lecteur d'empreintes digitales 10 comprend un écran d'affichage déporté 11 et est relié à des moyens informatiques de traitement de données comprenant un serveur 12 comprenant au moins un microprocesseur 13 et des moyens de mémorisation, ici une mémoire 14.

Lorsqu'il se présente au bureau d'enregistrement 6, le voyageur 1 présente son billet d'avion, son passeport biométrique 2 et applique sa main droite sur le lecteur d'empreintes digitales 10. Le préposé à l'enregistrement lance, au cours d'une unique opération, les acquisitions 11.1, 11.2, 11.3, 11.4 et 11.5 des empreintes des doigts du voyageur 1 posés respectivement sur les plages d'acquisition 10.1 à 10.5 du lecteur d'empreintes digitales 10. Le passeport biométrique 2 est, quant à lui, placé sur un lecteur spécifique qui permet d'accéder aux informations contenues dans la puce sécurisée 3, notamment les enregistrements certifiés 4 et 5 des empreintes digitales de l'index et du majeur de la main droite du voyageur 1. Les acquisitions 11.2 et 11.3 correspondant aux empreintes digitales de l'index et du majeur du voyageur 1 sont alors comparées avec les enregistrements certifiés 4 et 5 contenus dans la puce sécurisée 3 du passeport biométrique 2. Cette comparaison est de préférence réalisée au sein de la puce sécurisée 3, les caractéristiques biométriques capturées étant transmises à la puce sécurisée 3 de telle manière que les enregistrements certifiés 4 et 5 ne sortent pas de la puce sécurisée 3. Après avoir réalisé la comparaison, la puce sécurisée 3 transmet une information indiquant si les caractéristiques biométriques sont identiques ou différentes par rapport aux enregistrements certifiés 4 et 5. En cas de correspondance des acquisitions 11.2 et 11.3 avec les enregistrements 4 et 5, le voyageur 1 est identifié comme étant le titulaire du passeport et son état civil est confirmé. Le serveur 12 mémorise alors dans un catalogue 15 de deuxièmes caractéristiques biométriques, les acquisitions 11.1, 11.4 et 11.5 correspondant aux empreintes du pouce, de l'annulaire et de l'auriculaire du voyageur 1 puis y associe un identifiant secondaire 16, ici le numéro de vol du voyageur 1 accolé à son numéro de siège dans l'avion, par exemple : AF 001-21B. On notera que les acquisitions 11.2 et 11.3 des empreintes de l'index et du majeur du voyageur 1 ne sont pas enregistrées dans le serveur 12.

Lors de son passage au point de contrôle des bagages 7, le voyageur 1 applique sa main droite sur un lecteur d'empreintes digitales 10 dont seules les plages d'acquisition 10.1, 10.4 et 10.5 sont actives. Les acquisitions des empreintes du pouce, de l'annulaire et de l'auriculaire sont envoyées au serveur 12 qui, après comparaison, établit une correspondance entre les empreintes acquises et les acquisitions 11.1, 11.4 et 11.5 enregistrées dans le catalogue 15 et renvoie sur l'écran déporté 11, à l'attention de l'agent de sécurité en charge du point de contrôle 7, un message indiquant l'identifiant secondaire 16 du voyageur 1, à savoir son numéro de vol et son siège dans l'avion. L'agent de sécurité sait alors que le voyageur 1 est régulièrement enregistré sur un des vols en partance et le serveur 12 enregistre que le voyageur 1 a bien effectué un contrôle de ses bagages. L'identification du voyageur 1 au point d'accès 8 à la zone des salles d'embarquement se déroule de la même manière et le serveur 12 enregistre que le voyageur 1 a bien franchi le point d'accès à la zone des salles d'embarquement. Ainsi, lorsqu'il se présente au guichet 9 d'accès à l'avion, le voyageur 1 s'identifie à nouveau selon son identifiant secondaire par lecture des empreintes digitales de son pouce, son annulaire et son auriculaire. Le serveur 12 confirme que la personne dont les empreintes du pouce de l'annulaire et de l'auriculaire viennent d'être lues est bien le voyageur 1, qu'il a effectivement passé tous les points de contrôle préalables au vol et qu'il peut donc accéder à l'avion. L'identité du voyageur 1 n'a été à aucun moment enregistrée dans le serveur 12 ni divulguée au cours des contrôles et la caractéristique biométrique par laquelle il s'est identifié à chaque point de contrôle ne permet pas de retrouver son état civil, même en cas d'accès au serveur 12.

On a ainsi procédé à une identification certaine du voyageur 1 par la comparaison d'une première caractéristique biométrique acquise (acquisitions 11.2 et 11.3 des empreintes digitales de l'index et du majeur de la main droite) avec un enregistrement de cette même première caractéristique porté sur un support certifié de données mettant en relation l'état civil du voyageur 1 et cette première caractéristique biométrique, à savoir le passeport biométrique 2. Le voyageur 1 dispose également d'un identifiant secondaire, sans relation avec son état civil, associé à une deuxième caractéristique biométrique distincte de celle nécessaire à l'établissement de son état civil, à savoir les empreintes digitales de son pouce, son annulaire et son auriculaire. Le voyageur 1 peut donc être singularisé (par son identifiant secondaire) sans que son état civil soit révélé ou puisse être déterminé. Le procédé selon l'invention permet donc une identification rapide, automatisée et respectueuse de la vie privée tout en apportant un niveau élevée de fiabilité.

Les éléments identiques à ceux précédemment décrits porteront une référence numérique identique à ceux-ci dans la description qui suit d'un deuxième mode de réalisation.

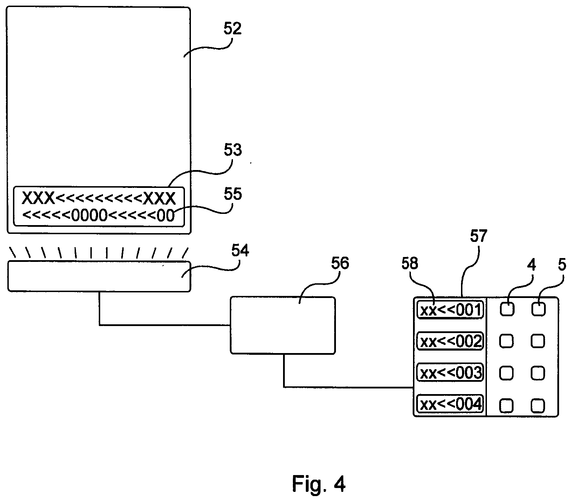

En référence à la figure 4, le support certifié de données est, ici, un passeport 52 dépourvu de puce électronique et comprenant au moins un champ de données. Ce champ de données est, ici, une zone codée 53 pouvant être lue par une machine, appelée également zone MRZ (pour « Machine Readable Zone »). Préalablement à son voyage, le voyageur 1 a procédé à son inscription dans une base de données de caractéristiques biométriques 57 dans laquelle sont associées les données 55 de la zone codée 53 avec des enregistrements certifiés des empreintes digitales 4 et 5 de l'index et du majeur de sa main droite.

Lors de son passage au bureau d'enregistrement 6, le voyageur 1 présente le passeport 52 et applique sa main droite sur le lecteur d'empreintes digitales 10. Le préposé à l'enregistrement présente alors la zone codée MRZ 53 face à un lecteur adapté 54. Le lecteur 54 lit les données 55 de la zone 53. Il est connecté à une unité de traitement 56 qui interroge, de façon connue en soi, la base de données de caractéristiques biométriques 57 associant des données de zones MRZ et des enregistrements certifiés de caractéristiques biométriques. L'unité de traitement 56 identifie le champ 58 de la base de données 57 contenant les informations 55 et utilise alors les enregistrements certifiés 4 et 5 des empreintes digitales de l'index et du majeur de la main droite du voyageur associés avec le champ 58 pour réaliser une comparaison avec les acquisitions 11.2 et 11.3. En cas de correspondance des acquisitions 11.2 et 11.3 avec les enregistrements 4 et 5, le voyageur 1 est identifié comme étant le titulaire du passeport et son état civil est confirmé. Le serveur 12 mémorise alors dans le catalogue 15 de deuxièmes caractéristiques biométriques, les acquisitions 11.1, 11.4 et 11.5 correspondant aux empreintes du pouce, de l'annulaire et de l'auriculaire du voyageur 1 puis y associe un identifiant secondaire 16. La suite du procédé d'identification est identique à celui préalablement décrit.

On obtient ainsi un procédé d'identification dans lequel le lien entre l'identifiant principal de support de données (le passeport 52) et la première caractéristique biométrique (les enregistrements certifiés 4 et 5) est établi par l'association d'un champ de données 53 du support certifié de données 52 avec un champ correspondant de la base de données 57 de caractéristique biométriques. Ce deuxième mode de réalisation permet ainsi de faire intervenir une identification biométrique quand bien même le voyageur 1 serait muni d'un support de données dépourvu de moyens de stockage de caractéristiques biométriques.

Selon une exemple non limitative l'identifiant secondaire de la personne à identifier peut etre son numéro de vol du voyageur 1 accolé à son numéro de siège dans l'avion, le procédé selon l'exemple non limitative s'applique également à d'autres types d'identifiants secondaires tels qu'un avatar dans un monde virtuel, un identifiant bancaire crypté, un numéro de licence d'un club de sport, un numéro tiré au hasard etc.
- bien qu'ici, le support certifié de données soit un passeport biométrique, le procédé selon l'invention s'applique également à d'autres types de supports certifiés de données tels que des cartes d'accès à un club de sport, un document d'identité, une carte bancaire, etc. ;
- bien qu'ici la première caractéristique biométrique corresponde aux empreintes digitales de l'index et du majeur de la main droite de la personne à identifier et que la deuxième caractéristique biométrique corresponde aux empreintes digitales du pouce, de l'annulaire et de l'auriculaire de la main droite, le procédé selon l' exemple non limitative s'applique également à d'autres caractéristiques biométriques comme par exemple les index de la main droite et de la main gauche comme première caractéristique biométrique et les pouces des deux mains comme deuxième caractéristique biométrique. La première caractéristique biométrique peut également correspondre à l'empreinte iridienne d'un œil et la deuxième caractéristique biométrique être le réseau veineux péri oculaire de ce même œil ou de l'autre ;
- bien qu'ici la deuxième caractéristique biométrique corresponde aux empreintes digitales du pouce, de l'annulaire et de l'auriculaire de la main droite, exemple non limitative s'applique également à une deuxième caractéristique biométrique ne comprenant qu'une ou plusieurs empreintes digitales.

## Revendications

1. Procédé d'identification d'une personne à identifier (1) possédant un support certifié de données (2) liant un identifiant principal et une première caractéristique biométrique (11.2, 11.3) d'un titulaire du support certifié de données (2), comprenant les étapes suivantes :
- acquérir, sur la personne à identifier (1), lors d'une unique opération, la première caractéristique biométrique (11.2, 11.3) et une deuxième caractéristique biométrique (11.1, 11.4, 11.5) distincte;
- vérifier que la personne à identifier (1) correspond au titulaire du support de données (2) par comparaison de la première caractéristique biométrique acquise (11.2, 11.3) avec celle liée au support de données (2);
- mémoriser la deuxième caractéristique biométrique acquise (11.1, 11.4, 11.5) et y associer un identifiant secondaire (16);
- lors d'une identification ultérieure, acquérir sur la personne à identifier (1) la deuxième caractéristique biométrique et la comparer à la deuxième caractéristique biométrique mémorisée (11.1, 11.4, 11.5),
dans lequel la première caractéristique biométrique (11.2, 11.3) correspond aux empreintes digitales d'un premier index et d'un premier majeur d'une première main du titulaire du support certifié de données (2) ; et
la deuxième caractéristique biométrique (11.1, 11.4, 11.5) comprend une empreinte digitale d'un premier pouce et/ou d'un premier annulaire et/ou d'un premier auriculaire de la première main,
dans lequel la seconde caractéristique biométrique est enregistrée, en association avec l'identifiant secondaire, dans un premier serveur qui ne contient ni la première caractéristique biométrique ni l'identifiant principal.

2. Procédé selon la revendication 1, dans lequel le support certifié de données (2) est un document d'identité comprenant une puce électronique (3).

3. Procédé selon la revendication 2, dans lequel le support certifié (2) est un passeport.

4. Procédé selon l'une quelconque des revendications précédentes, dans lequel le lien entre l'identifiant principal du support de données et la première caractéristique biométrique est établi par une association d'un champ de données du support certifié de données avec un champ correspondant d'une base de données de caractéristique biométriques.

## Patentansprüche

1. Verfahren zur Identifizierung einer zu identifizierenden Person (1), die einen zertifizierten Datenträger (2) besitzt, der einen Hauptidentifikator und ein erstes biometrisches Merkmal (11.2, 11.3) eines Inhabers des zertifizierten Datenträgers (2) verknüpft, umfassend die folgenden Schritte:
- Erfassen, während eines einzigen Vorgangs, des ersten biometrischen Merkmals (11.2, 11.3) an der zu identifizierenden Person (1) und eines unterschiedlichen zweiten biometrischen Merkmals (11.1, 11.4, 11.5);
- Verifizieren, dass die zu identifizierende Person (1) dem Inhaber des Datenträgers (2) entspricht, indem das erfasste erste biometrische Merkmal (11.2, 11.3) mit demjenigen, das mit dem Datenträger (2) verknüpft ist, verglichen wird;
- Speichern des erfassten zweiten biometrischen Merkmals (11.1, 11.4, 11.5) und Verknüpfen desselben mit einem sekundären Identifikator (16);
- während einer späteren Identifizierung, Erfassen des zweiten biometrischen Merkmals an der zu identifizierende Person (1) und Vergleichen desselben mit dem gespeicherten zweiten biometrischen Merkmal (11.1, 11.4, 11.5),
wobei das erste biometrische Merkmal (11.2, 11.3) den Fingerabdrücken eines Zeigefingers und eines Mittelfingers einer ersten Hand des Inhabers des zertifizierten Datenträgers (2) entspricht; und
das zweite biometrische Merkmal (11.1, 11.4, 11.5) einen Fingerabdruck eines ersten Daumens und/oder eines ersten Ringfingers und/oder eines ersten kleinen Fingers der ersten Hand umfasst,
wobei das zweite biometrische Merkmal in Verbindung mit dem sekundären Identifikator in einem ersten Server gespeichert wird, der weder das erste biometrische Merkmal noch den Hauptidentifikator enthält.

2. Verfahren nach Anspruch 1, bei dem der zertifizierte Datenträger (2) ein Identitätsdokument ist, das einen Mikrochip (3) enthält.

3. Verfahren nach Anspruch 2, bei dem der zertifizierte Träger (2) ein Pass ist.

4. Verfahren nach einem der vorhergehenden Ansprüche, bei dem die Verknüpfung zwischen dem Hauptidentifikator des Datenträgers und dem ersten biometrischen Merkmal dadurch hergestellt wird, dass ein Datenfeld des zertifizierten Datenträgers mit einem Feld, das einer Datenbank mit biometrischen Merkmalen entspricht, verknüpft wird.

## Claims

1. The invention relates to a method for identifying a person to be identified (1) having a certified data medium (2) linking a primary identifier and a first biometric characteristic (11.2, 11.3) of a holder of the data medium (2), comprising the following steps:
- acquiring, during a unique operation, the first biometric characteristic (11.2, 11.3) on the person to be identified (1) and a second, distinct biometric characteristic (11.1, 11.4, 11.5);
- verifying that the person to be identified (1) corresponds to the holder of the data medium (2) by comparing the first acquired biometric characteristic (10.2, 10.3) to that of the data medium (2);
- storing the second acquired biometric characteristic (11.1, 11.4, 11.5) and associating it with a secondary identifier (16);
- during a subsequent identification, acquiring the second biometric characteristic on the person to be identified (1) and comparing it to the second biometric characteristic (11.1, 11.4, 11.5),
wherein the first biometric characteristic (11.2, 11.3) corresponds to the fingerprints of a first index and a first major of a first hand of the holder of the certified data medium (2); and
the second biometric characteristic (11.1, 11.4, 11.5) comprises a fingerprint of a first inch and / or a first ring finger and / or a first little finger of the first hand,
wherein the second biometric characteristic is registered, in association with the secondary identifier, in a first server which contains neither the first biometric characteristic nor the primary identifier..

2. A method according to claim 1, wherein the certified data medium (2) is an identity document comprising an electronic chip (3).

3. A method according to claim 2, wherein the certified medium (2) is a passport.

4. A method according to any one of the preceding claims, wherein the link between the primary identifier of the data medium and the first biometric characteristic is established by an association of a field of data in the certified data medium with a corresponding field of a biometric characteristic database.
